(19) **Europäisches Patentamt**
**European Patent Office**
**Office européen des brevets**

(11) **EP 3 925 800 B1**

(12) **EUROPEAN PATENT SPECIFICATION**

(45) Date of publication and mention
of the grant of the patent:
**17.04.2024 Bulletin 2024/16**

(21) Application number: **21179767.5**

(22) Date of filing: **16.06.2021**

(51) International Patent Classification (IPC):
**B60C 11/13** *(2006.01)* **B60C 11/12** *(2006.01)*
**B60C 11/03** *(2006.01)* **B60C 11/11** *(2006.01)*

(52) Cooperative Patent Classification (CPC):
**B60C 11/1392; B60C 11/033; B60C 11/0332;**
**B60C 11/11; B60C 11/1263;** B60C 11/0306;
B60C 2200/14

(54) **TIRE**

REIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.06.2020 JP 2020104754**

(43) Date of publication of application:
**22.12.2021 Bulletin 2021/51**

(73) Proprietor: **Sumitomo Rubber Industries, Ltd.**
**Kobe-shi, Hyogo-ken 651-0072 (JP)**

(72) Inventor: **NOTSU, Ryoji**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 659 823** **EP-A1- 3 659 824**
**WO-A1-2012/087272** **JP-A- 2003 267 003**
**JP-A- 2007 331 656** **JP-A- 2013 035 346**
**US-A1- 2014 000 776** **US-A1- 2015 336 430**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a tire.

Description of the Background Art

Japanese Laid-Open Patent Publication No. 2018-176881 describes a pneumatic tire in which first blocks and second blocks are disposed adjacent to each other via main grooves in a tread portion. The main groove has first groove portions and second groove portions that alternate with the first groove portions in the tire circumferential direction. The first blocks and the second blocks each have a recess formed by partially cutting a corner portion between its tread surface and wall surface. Such a pneumatic tire is considered to improve mud performance while maintaining noise performance.

EP 3 659 823 A1 discloses a tire comprising the features according to the preamble of claim 1. JP 2007 331656 A discloses a tire comprising features according to a related technology, wherein blocks in a tread portion of the tire are not provided with sipes.

JP 2003 267003 A discloses a tire comprising features according to a related technology.

WO 2012/087272 A also discloses a tire comprising features according to a related technology. JP 2013 035346 A also discloses a tire comprising features according to a related technology. US 2014/0000767 A1 also discloses a tire comprising features according to a related technology. US 2015/0336430 A1 discloses a tire having blocks in a tread portion which are provided with sipes.

SUMMARY OF THE INVENTION

In recent years, mud performance is required to be further enhanced without degrading noise performance.

The present invention has been made in view of the aforementioned circumstances, and the main object of the present invention is to provide a tire that allows enhancement of mud performance without degrading noise performance.

This object is satisfied by a tire comprising the features of claim 1. The tire includes a tread portion which has a plurality of blocks formed by circumferential grooves and lateral grooves. The plurality of blocks include at least recess-equipped blocks having recesses disposed inward of a tread surface in a tire radial direction and outward of groove bottoms of the lateral grooves in the tire radial direction. The recesses include a chamfered portion, a stepped portion and a midway terminating groove. A ratio (Ar/At) of a total area Ar of the recesses to a total area At of tread surfaces of the plurality of blocks is 10% to 20% in a ground contact surface when the tire is mounted on a normal rim and inflated to a normal internal pressure, a normal load is applied to the tire, and the tire is brought into contact with a plane at a camber angle of 0°.

In the tire of the present invention, the recess-equipped blocks each have at least one sipe, and the sipe includes a raised portion formed by raising a sipe bottom. The recesses further include the raised portion.

In the tire of the present invention, a ratio (Cr/Ct) of a total area Cr of the recesses in a tread crown portion to a total area Ct of the tread surfaces in the tread crown portion is preferably greater than a ratio (Sr/St) of a total area Sr of the recesses in a tread shoulder portion to a total area St of the tread surfaces in the tread shoulder portion, in the ground contact surface.

In the tire of the present invention, the ratio (Cr/Ct) is preferably 15% to 30%.

In the tire of the present invention, the ratio (Sr/St) is preferably 6% to 13%.

In the tire of the present invention, the each of the chamfered portions is preferably formed at an edge of the tread surface.

In the tire of the present invention, each of the stepped portions is preferably formed at an edge of the tread surface and recessed to form a stepped shape.

In the tire of the present invention, it is preferable that the recess-equipped block has at least one midway terminating groove.

In the tire of the present invention, each of the chamfered portions is preferably formed at an edge of the tread surface, and each of the stepped portions is preferably formed at an edge of the tread surface and recessed to form a stepped shape, and a total area Aa of the stepped portions, a total area Ab of the raised portions, and a total area Ac of the chamfered portions preferably satisfy the following expression (1) in the ground contact surface.

$$Aa > Ab > Ac \cdots (1)$$

In the tire of the present invention, in the ground contact surface, a ratio (Ab/At) of the total area Ab of the raised portions to the total area At of the tread surfaces of the plurality of blocks is preferably not less than 3%.

In the tire of the present invention, in the ground contact surface, a ratio (Ac/At) of the total area Ac of the chamfered portions to the total area At of the tread surfaces of the plurality of blocks is preferably not less than 1%.

The present invention has the above-described structure to enhance mud performance without degrading noise performance.

BRIEF DESCRIPTION OF THE DRAWINGS

FIG. 1 is a development of a tread portion according to one embodiment of the present invention;
FIG. 2 is a development of the tread portion;
FIG. 3(a) and FIG. 3(b) are each a schematic cross-sectional view of a recess-equipped block, for illustrating the recess;
FIG. 4 is an enlarged view of FIG. 2; and
FIG. 5 is an enlarged view of FIG. 2.

DESCRIPTION OF THE PREFERRED EMBODIMENTS

Embodiments of the present invention will be described below with reference to the drawings.

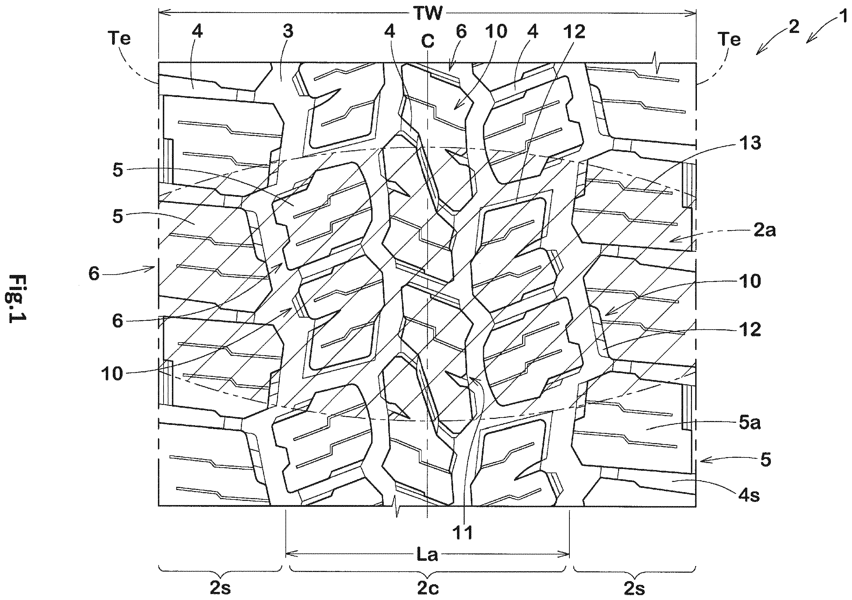

FIG. 1 is a development of a tread portion 2 of a tire 1 according to the present embodiment. FIG. 1 shows a pneumatic tire for a four-wheel-drive passenger car as a preferable example. However, the tire 1 of the present invention is also applicable to, for example, a light truck tire and a heavy-duty tire. Furthermore, the tire 1 of the present invention is also applicable to tires in other categories.

As shown in FIG. 1, in the present embodiment, the tread portion 2 has a plurality of blocks 5 formed by circumferential grooves 3 and lateral grooves 4.

The plurality of blocks 5 include at least recess-equipped blocks 6. Each recess-equipped block 6 has recesses 10 disposed inward of a tread surface 5a in the tire radial direction and outward of a groove bottom 4s of the lateral groove 4 in the tire radial direction. The recesses 10 having such a structure exert a shearing force on a muddy road surface such as muddy soil and swampy ground. Meanwhile, the recesses 10 having such a structure compress air between the road surface and the recesses 10 to generate pumping sounds during running on a dry asphalt road surface.

In the present embodiment, in a ground contact surface 2a in a normal load applied state, a ratio (Ar/At) of the total area Ar of the recesses 10 to the total area At of the tread surfaces 5a of the plurality of blocks 5 is 10% to 20%. Since the ratio (Ar/At) is not less than 10%, a shearing force with respect to a muddy road surface is increased and mud performance can be enhanced. Since the ratio (Ar/At) is not greater than 20%, pumping sounds are inhibited from becoming loud, thereby maintaining noise performance. In FIG. 1, an example of the ground contact surface 2a in the normal load applied state is indicated by diagonal lines.

The "normal load applied state" represents a state in which a normal load is applied to the tire 1 in a normal state, and the tire 1 is brought into contact with a plane at a camber angle of 0°. The "normal state" represents an unloaded state in which the tire 1 is mounted to a normal rim (not shown), and inflated to a normal internal pressure.

The "normal load" represents a load that is defined by a standard, in a standard system including the standard with which the tire complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard. The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

In the normal load applied state, both outermost ground contact positions of the ground contact surface 2a in the tire axial direction are defined as tread ends Te, Te. In the normal state, a distance between the tread ends Te and Te in the tire axial direction is defined as a tread width TW. Unless otherwise specified, dimensions and the like of the components of the tire 1 are represented as values measured in the normal state.

The circumferential groove 3 extends such that the minimum value of a groove width is not less than 4 mm, and an angle of the groove relative to the tire circumferential direction is not greater than 45°. The lateral groove 4 extends such that the minimum value of a groove width is not less than 4 mm, and an angle of the groove relative to the tire circumferential direction is greater than 45°. In the description herein, the "groove" is a groove-shaped portion having a groove width of not less than 2 mm, and is distinguished from a sipe (described below) formed as a cut portion having a width of less than 2 mm.

The tread portion 2 is divided into a tread crown portion 2c and tread shoulder portions 2s. In the present embodiment, the tread crown portion 2c is a region in which a tire equator C is at the center of the region and a width La thereof in the tire axial direction is 45% to 55% of the tread width TW. In the present embodiment, the tread shoulder portions 2s are regions located on both outer sides of the tread crown portion 2c in the tire axial direction so as to be adjacent to the tread crown portion 2c.

A ground-contact pressure on the tread crown portion 2c is higher than that on the tread shoulder portion 2s during straight running. Therefore, the respective recess 10 is enlarged in the tread crown portion 2c, whereby a shearing force can be effectively exerted on a muddy road surface. The pumping sound generated at the tread shoulder portion 2s is considered to exert a greater influence on noise performance than the pumping sound generated at the tread crown portion 2c. Therefore, in the ground contact surface 2a in the normal load applied state, a recess ratio (Cr/Ct) in the tread crown portion 2c is preferably greater than a recess ratio (Sr/St) in the tread shoulder portion 2s. The recess ratio (Cr/Ct) is a ratio of the total area Cr of the recesses 10 in the tread crown portion 2c to the total area Ct of the tread surfaces 5a of the blocks 5 in the tread crown portion 2c. The recess ratio (Sr/St) is a ratio of the total area Sr of the recesses 10 in the tread shoulder portion 2s to the total area St of the tread surfaces 5a of the blocks 5 in the tread shoulder portion 2s.

In order to effectively exhibit the above-described effects, the recess ratio (Cr/Ct) in the tread crown portion 2c is preferably not less than 15% and more preferably not less than 22%, and is preferably not greater than 30% and more preferably not greater than 26%. The recess ratio (Sr/St) in the tread shoulder portion 2s is preferably not less than 6% and more preferably not less than 10%, and is preferably not greater than 13% and more preferably not greater than 12%.

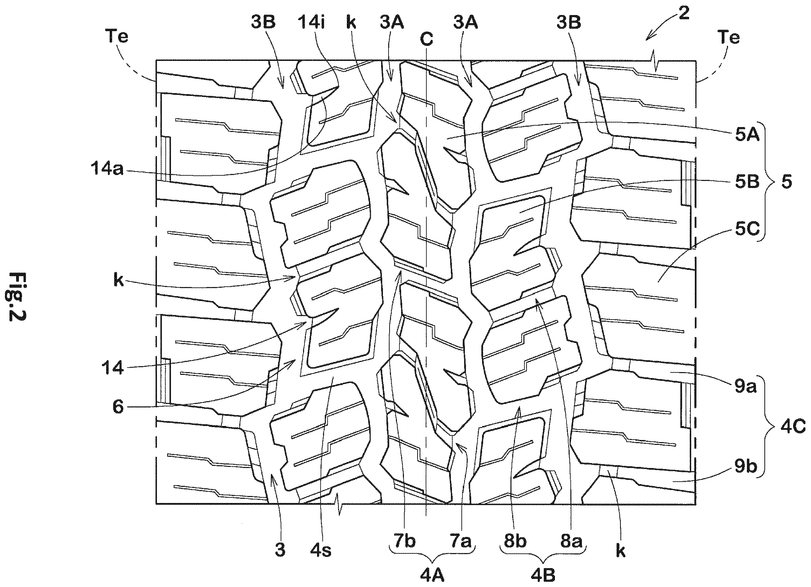

FIG. 2 is a development of the tread portion 2. As shown in FIG. 2, in the present embodiment, the circumferential groove 3 includes a pair of crown circumferential grooves 3A, and a pair of shoulder circumferential grooves 3B disposed outward of the crown circumferential grooves 3A, respectively, in the tire axial direction. In the present embodiment, the crown circumferential grooves 3A and the shoulder circumferential grooves 3B continuously zigzag in the tire circumferential direction. However, the circumferential groove 3 is not limited to the groove formed in such a manner.

In the present embodiment, the lateral groove 4 includes crown lateral grooves 4A, middle lateral grooves 4B, and shoulder lateral grooves 4C.

In the present embodiment, the crown lateral groove 4A extends so as to connect between the paired crown circumferential grooves 3A and 3A. The crown lateral grooves 4A include, for example, first crown lateral grooves 7a, and second crown lateral grooves 7b inclined relative to the tire circumferential direction at an angle greater than that of the first crown lateral groove 7a. The first crown lateral grooves 7a and the second crown lateral grooves 7b alternate in the tire circumferential direction.

In the present embodiment, the middle lateral groove 4B extends so as to connect between the crown circumferential groove 3A and the shoulder circumferential groove 3B. The middle lateral grooves 4B include, for example, first middle lateral grooves 8a, and second middle lateral grooves 8b inclined relative to the tire circumferential direction at an angle greater than that of the first middle lateral groove 8a. The first middle lateral grooves 8a and the second middle lateral grooves 8b alternate in the tire circumferential direction.

In the present embodiment, the shoulder lateral groove 4C extends so as to connect between the shoulder circumferential groove 3B and the tread end Te. The shoulder lateral grooves 4C include, for example, first shoulder lateral grooves 9a, and second shoulder lateral grooves 9b each having a length greater than that of the first shoulder lateral groove 9a in the tire axial direction. The first shoulder lateral grooves 9a and the second shoulder lateral grooves 9b alternate in the tire circumferential direction.

In the present embodiment, the first crown lateral grooves 7a, the first middle lateral grooves 8a, and the shoulder lateral grooves 4C each include a groove bottom raised portion k at which the groove bottom is raised.

Thus, the blocks 5 of the tread portion 2 include a plurality of crown blocks 5A, a plurality of middle blocks 5B, and a plurality of shoulder blocks 5C. Each crown block 5A is demarcated by the pair of the crown circumferential grooves 3A, the first crown lateral groove 7a, and the second crown lateral groove 7b. Each middle block 5B is demarcated by the crown circumferential groove 3A, the shoulder circumferential groove 3B, the first middle lateral groove 8a, and the second middle lateral groove 8b. Each shoulder block 5C is demarcated by the shoulder circumferential groove 3B, the tread end Te, the first shoulder lateral groove 9a, and the second shoulder lateral groove 9b.

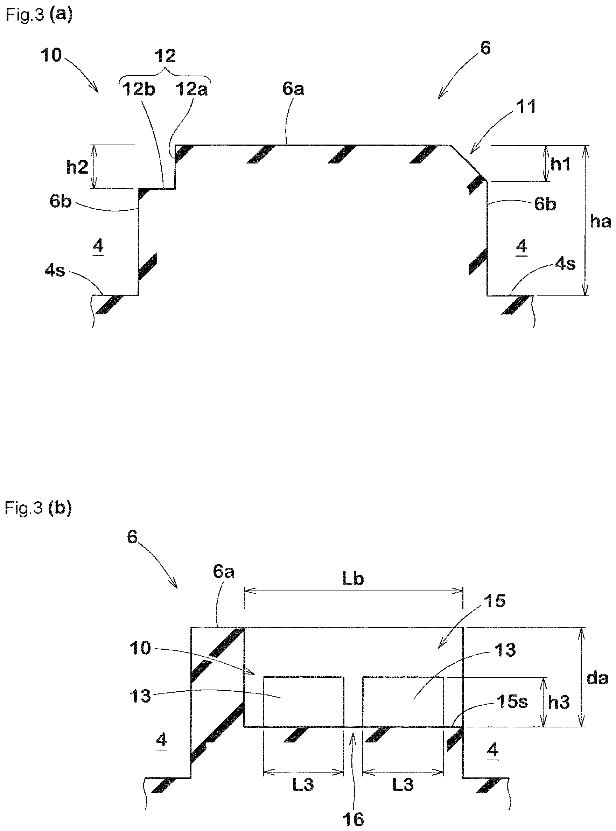

FIG. 3(a) is a schematic cross-sectional view of the recess-equipped block 6, for illustrating the recesses 10. As shown in FIG. 3(a), the recess-equipped block 6 includes a tread surface 6a, and a wall surface 6b formed inward of the tread surface 6a in the tire radial direction so as to extend from the circumferential groove 3 (shown in FIG. 2) or the groove bottom 4s of the lateral groove 4.

The recesses 10 include a chamfered portion 11, a stepped portion 12, a raised portion (shown in FIG. 3(b)) 13, and a midway terminating groove (shown in FIG. 2) 14.

In the present embodiment, the chamfered portion 11 is formed at the edge of the tread surface 6a. For example, the chamfered portion 11 is formed, as a surface that is inclined relative to the tire radial direction more gently than the wall surface 6b, at a corner portion between the tread surface 6a and the wall surface 6b. In the present embodiment, the chamfered portion 11 extends inward from the tread surface 6a in the tire radial direction. A height h1 of the chamfered portion 11 in the tire radial direction is preferably 15% to 40% of a groove depth ha of the circumferential groove 3 or the lateral groove 4 adjacent to the chamfered portion 11.

In the present embodiment, the stepped portion 12 is formed at the edge of the tread surface 6a, and is recessed to form a stepped shape. The stepped portion 12 is formed so as to include, for example, at least one radially-extending face 12a extending inward and outward in the tire radial direction, and at least one outward-facing face 12b that is continuous with the radially-extending face 12a and extends along the tread surface 6a. In the present embodiment, the radially-extending face 12a is continuous with the tread surface 6a. For example, a height h2, in the tire radial direction, between the tread surface 6a and the outward-facing face 12b located on the outermost side of the stepped portion 12 in the tire radial direction is preferably 25% to 35% of the groove depth ha of the circumferential groove 3 or the lateral groove 4 adjacent to the stepped portion 12.

FIG. 3(b) is a schematic cross-sectional view of a recess-equipped block 6 according to the invention. As shown in FIG. 3(b), the recess-equipped block 6 has a sipe 15. The sipe 15 has, for example, one end terminating in the tread surface 6a and the other end connecting with the lateral groove 4. The sipe 15 having such a structure inhibits reduction of stiffness of the block 5. The sipe 15 is not limited to the sipe formed in such a manner. The sipe 15 may have both ends connecting with the circumferential groove 3 or the lateral groove 4. Alternatively, the sipe 15 may have both ends terminating in the tread surface 6a.

According to the invention, the raised portion 13 is formed by raising a sipe bottom 15s of the sipe 15. The raised portion 13 having such a structure inhibits the sipe 15 from being widely opened during contact with the ground, and contributes to enhancement of a scratching force for scratching hard muddy soil that is harder than swampy ground. A height h3 of the raised portion 13 is preferably 30% to 60% of a depth da of the sipe 15.

In the present embodiment, a plurality of the raised portions 13 are disposed via gaps 16. In the present embodiment, two raised portions 13 are disposed in one sipe 15. The total ($\Sigma L3$) of lengths L3 of the raised portions 13 is preferably 40% to 80% of a length Lb of the sipe 15.

As shown in FIG. 2, in the present embodiment, the midway terminating groove 14 extends from the circumferential groove 3 or the lateral groove 4 and terminates in the recess-equipped block 6. The midway terminating groove 14 having such a structure also enhances a shearing force with respect to swampy ground. The midway terminating groove 14 includes, for example, an enlarged portion 14a formed by gradually increasing a groove width from an inner end 14i toward the circumferential groove 3 or the lateral groove 4. The enlarged portion 14a having such a structure allows muddy soil accumulated therein to be smoothly discharged into the circumferential groove 3 or the lateral groove 4.

As shown in FIG. 1, in the ground contact surface 2a in the normal load applied state, the total area Aa of the stepped portions 12, the total area Ab of the raised portions 13, and the total area Ac of the chamfered portions 11 preferably satisfy the following expression (1).

$$Aa > Ab > Ac \cdots (1)$$

The stepped portion 12 acts to exert a shearing force higher than the raised portion 13 on swampy ground. The raised portion 13 acts to exert a scratching force higher than the chamfered portion 11 on muddy soil. Therefore, according to the definition as in expression (1), mud performance and noise performance can be enhanced in a well-balanced manner.

In order to more effectively exhibit the above-described effects, in the ground contact surface 2a in the normal load applied state, a ratio (Ab/At) of the total area Ab of the raised portions 13 to the total area At of the tread surfaces 5a of the plurality of the blocks 5 is preferably not less than 3% and more preferably not less than 5%. From a similar standpoint, a ratio (Ac/At) of the total area Ac of the chamfered portions 11 to the total area At of the tread surfaces 5a of the plurality of the blocks 5 is preferably not less than 1% and more preferably not less than 2.5%. The ratio (Ab/At) is preferably not greater than 11% and more preferably not greater than 9%. Similarly, the ratio (Ac/At) is preferably not greater than 5% and more preferably not greater than 3.5%.

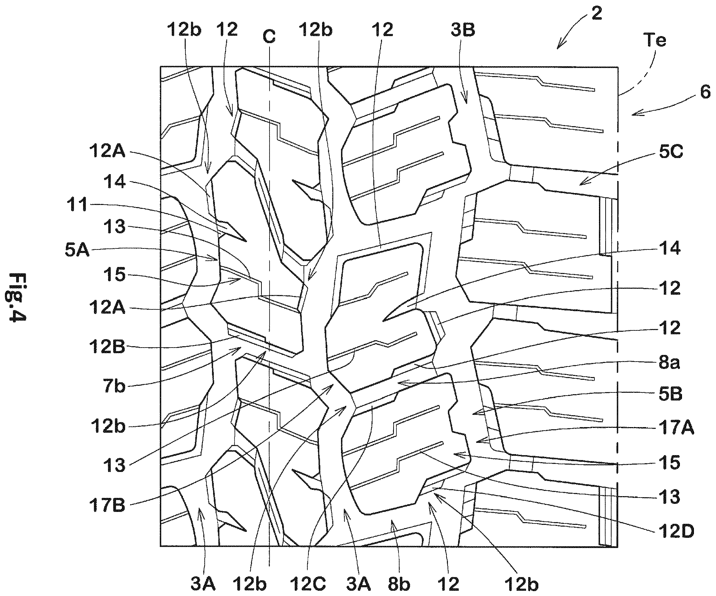

FIG. 4 is an enlarged view of the tread portion 2 shown in FIG. 2. As shown in FIG. 4, in the present embodiment, the recess-equipped blocks 6 form the crown blocks 5A, the middle blocks 5B, and the shoulder blocks 5C. The recess-equipped blocks 6 are not limited to such a structure. For example, only the crown blocks 5A may be formed by the recess-equipped blocks 6, or the crown blocks 5A and the middle blocks 5B may be formed by the recess-equipped blocks 6.

In the present embodiment, the crown block 5A includes the chamfered portion 11, the stepped portion 12, the raised portion 13, and the midway terminating groove 14. The stepped portion 12 of the crown block 5A includes a pair of circumferential groove stepped portions 12A adjacent to the paired crown circumferential grooves 3A, respectively, and a lateral groove stepped portion 12B adjacent to the second crown lateral groove 7b. In the present embodiment, each of the circumferential groove stepped portions 12A has one outward-facing face 12b. In the present embodiment, the lateral groove stepped portion 12B has two outward-facing faces 12b disposed at different positions in the tire radial direction.

In the crown block 5A, the two raised portions 13 are disposed in the one sipe 15 communicating with the paired crown circumferential grooves 3A. The midway terminating groove 14 of the crown block 5A is disposed so as to communicate with one of the crown circumferential grooves 3A. The chamfered portion 11 of the crown block 5A is disposed so as to connect with the midway terminating groove 14 and the crown circumferential groove 3A.

In the present embodiment, the middle blocks 5B include first middle blocks 17A each having the stepped portion 12 and the raised portion 13, and second middle blocks 17B each having the stepped portion 12, the raised portion 13, and the midway terminating groove 14. The first middle blocks 17A and the second middle blocks 17B alternate in the tire circumferential direction.

The stepped portion 12 of the first middle block 17A includes a middle first stepped portion 12C adjacent to the first middle lateral groove 8a, and a middle second stepped portion 12D adjacent to the second middle lateral groove 8b. The middle first stepped portion 12C has one outward-facing face 12b. The middle second stepped portion 12D has two outward-facing faces 12b disposed at different positions in the tire radial direction. In the first middle block 17A, the two raised portions 13 are disposed in each of the two sipes 15, 15 disposed in the first middle block 17A.

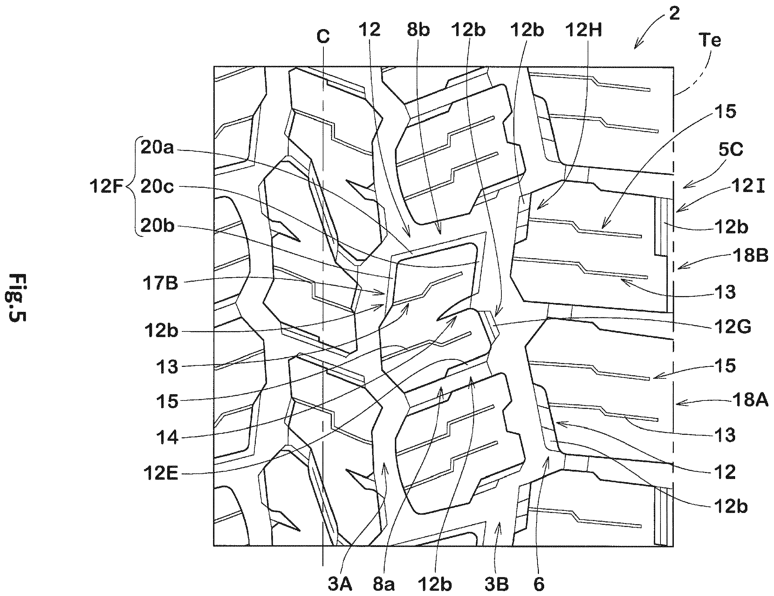

FIG. 5 is an enlarged view of the tread portion 2 shown in FIG. 2. As shown in FIG. 5, the stepped portion 12 of the second middle block 17B includes, for example, a middle third stepped portion 12E, a middle fourth stepped portion 12F, and a middle fifth stepped portion 12G.

In the present embodiment, the middle third stepped portion 12E is adjacent to the first middle lateral groove 8a. The middle third stepped portion 12E has, for example, one outward-facing face 12b. In the present embodiment, the middle fourth stepped portion 12F is disposed on the side opposite to the middle third stepped portion 12E side in the tire circumferential direction. The middle fourth stepped portion 12F includes a first portion 20a adjacent to the second middle lateral groove 8b, a second portion 20b adjacent to the crown circumferential groove 3A, and a third portion 20c adjacent to the shoulder circumferential groove 3B. The first portion 20a to the third portion 20c each have one outward-facing face 12b, and the outward-facing faces 12b are continuous with each other. In the present embodiment, the middle fifth stepped portion 12G is adjacent to the shoulder circumferential groove 3B. The middle fifth stepped portion 12G has, for example, two outward-facing faces 12b disposed at different positions in the tire radial direction.

In the second middle block 17B, the two raised portions 13 are disposed in each of the two sipes 15, 15 disposed in the second middle block 17B. The midway terminating groove 14 of the second middle block 17B is disposed so as to communicate with the shoulder circumferential groove 3B. The midway terminating groove 14 of the second middle block 17B connects with the third portion 20c of the middle fourth stepped portion 12F.

In the present embodiment, the shoulder block 5C includes the stepped portion 12 and the raised portion 13. The shoulder blocks 5C include first shoulder blocks 18A each having one stepped portion 12, and second shoulder blocks 18B each having two stepped portions 12. The first shoulder blocks 18A and the second shoulder blocks 18B alternate in the tire circumferential direction.

The stepped portion 12 of the first shoulder block 18A is adjacent to the shoulder circumferential groove 3B. The stepped portion 12 of the first shoulder block 18A has three outward-facing faces 12b disposed at different positions in the tire radial direction. The three outward-facing faces 12b are aligned in the tire circumferential direction. In the first shoulder block 18A, the two raised portions 13 are disposed in each of the two sipes 15, 15 disposed in the first shoulder block 18A.

The stepped portion 12 of the second shoulder block 18B includes a shoulder first stepped portion 12H adjacent to the shoulder circumferential groove 3B, and a shoulder second stepped portion 12I adjacent to the tread end Te. The shoulder first stepped portion 12H has three outward-facing faces 12b disposed at different positions in the tire radial direction. The three outward-facing faces 12b are aligned in the tire circumferential direction. The shoulder second stepped portion 12I has three outward-facing faces 12b disposed at different positions in the tire radial direction. The three outward-facing faces 12b are aligned in the tire axial direction.

In the second shoulder block 18B, the two raised portions 13 are disposed in each of the two sipes 15, 15 disposed in the second shoulder block 18B.

Although the preferred embodiments of the present invention have been described above in detail, the present invention is not limited to the illustrated embodiments but only by the appended claims.

[Examples]

Tires (size: 265/70R17), for a four-wheel-drive vehicle, having the basic pattern shown in FIG. 1 were produced as sample tires based on the specifications indicated in Table 1. Each sample tire was tested for mud performance and noise performance. The main specifications common to the sample tires and the test method are as follows.

<Mud performance>

The sample tires of each example were mounted to all wheels of the four-wheel-drive vehicle having an engine displacement of 5300 cc under the following conditions. A test driver drove the vehicle on a test course having a muddy road surface, and, at that time, made sensory evaluation for running characteristics such as traction, running stability, and cornering performance. The results were indicated as scores with the score of comparative example 1 being 100. The greater the value is, the better mud performance is.

Rim: 17×8.0J (all wheels)
Internal pressure: 410 kPa (front wheel), 520 kPa (rear wheel)
La/TW: 50%

<Noise performance>

Noise in the vehicle was measured when the above-described test vehicle was caused to run at the speed of 60 km/h on a test course having a dry asphalt road surface. The results were determined based on a magnitude (db) of the noise, and indicated as indexes with the value for comparative example 1 being 100. The less the value is, the more excellent noise performance is.

The test results and the like are indicated in Table 1.

[Table 1]

|  | Comp. Ex. 1 | Comp. Ex. 2 | Ex. 1 | Ex. 2 | Ex. 3 | Ex. 4 |
|---|---|---|---|---|---|---|
| Ratio (Ar/At) (%) | 5 | 25 | 20 | 15 | 17 | 10 |
| Ratio (Cr/Ct) (%) | 8 | 25 | 30 | 15 | 30 | 15 |
| Ratio (Sr/St) (%) | 4 | 30 | 13 | 13 | 6 | 6 |
| Mud performance [Score: the greater the value is, the better mud performance is] | 100 | 120 | 120 | 120 | 115 | 110 |
| Noise performance [Index: the less the value is, the better noise performance is] | 100 | 115 | 105 | 100 | 95 | 95 |

According to the test results, it was confirmed that mud performance was enhanced while noise performance was maintained in the tires of the examples as compared with the tires of comparative examples.

**Claims**

1. A tire (1) comprising

a tread portion (2), wherein
the tread portion (2) has a plurality of blocks (5) formed by circumferential grooves (3) and lateral grooves (4),
the plurality of blocks (5) include at least recess-equipped blocks (6) having recesses (10) disposed inward of a tread surface (5a, 6a) in a tire radial direction and outward of groove bottoms (4s) of the lateral grooves (4) in the tire radial direction,
a ratio Ar/At of a total area Ar of the recesses (10) to a total area At of tread surfaces (5a) of the plurality of blocks (5) is 10% to 20% in a ground contact surface (2a) when the tire (1) is mounted on a normal rim and inflated to a normal internal pressure, a normal load is applied to the tire (1), and the tire (1) is brought into contact with a plane at a camber angle of 0°,
the recesses (10) include a chamfered portion (11), a stepped portion (12), and a midway terminating groove (14), and
the recess-equipped blocks (6) each have at least one sipe (15), **characterized in that**
the recesses (10) further include a raised portion (13),
the sipe (15) includes the raised portion (13) formed by raising a sipe bottom (15s).

2. The tire (1) according to claim 1, wherein a ratio Cr/Ct of a total area Cr of the recesses (10) in a tread crown portion (2c) to a total area Ct of the tread surfaces (5a) in the tread crown portion (2c) is greater than a ratio Sr/St of a total area Sr of the recesses (10) in a tread shoulder portion (2s) to a total area St of the tread surfaces (5a) in the tread shoulder portion (2s), in the ground contact surface (2a).

3. The tire (1) according to claim 2, wherein the ratio Cr/Ct is 15% to 30%.

4. The tire (1) according to claim 2 or 3, wherein the ratio Sr/St is 6% to 13%.

5. The tire (1) according to any one of claims 1 to 4, wherein each of the chamfered portions (11) is formed at an edge of the tread surface (6a).

6. The tire (1) according to any one of claims 1 to 5, wherein each of the stepped portions (12) is formed at an edge of the tread surface (6a) and recessed to form a stepped shape.

7. The tire (1) according to any one of claims 1 to 6, wherein
the recess-equipped block (6) has at least one midway terminating groove (14).

8. The tire (1) according to any one of claims 1 to 7, wherein

each of the chamfered portions (11) is formed at an edge of the tread surface (6a), and each of the stepped portions (12) is formed at an edge of the tread surface (6a) and recessed to form a stepped shape, and
a total area Aa of the stepped portions (12), a total area Ab of the raised portions (13), and a total area Ac of the chamfered portions (11) satisfy the following expression (1) in the ground contact surface (2a).

$$Aa > Ab > Ac \cdots (1)$$

9. The tire (1) according to any one of claims 1 to 8, wherein, in the ground contact surface (2a), a ratio Ab/At of the total area Ab of the raised portions (13) to the total area At of the tread surfaces (5a) of the plurality of blocks (5) is not less than 3%.

10. The tire (1) according to claim 5, 8 or 9, wherein, in the ground contact surface (2a), a ratio Ac/At of the total area Ac of the chamfered portions (11) to the total area At of the tread surfaces (5a) of the plurality of blocks (5) is not less than 1%.

**Patentansprüche**

1. Reifen (1), umfassend

einen Laufflächenabschnitt (2), wobei
der Laufflächenabschnitt (2) mehrere Blöcke (5) aufweist, die durch Umfangsrillen (3) und Querrillen (4) gebildet sind,
die mehreren Blöcke (5) zumindest mit einer Aussparung versehene Blöcke (6) umfassen, die Aussparungen (10) aufweisen, die in einer Reifenradialrichtung innerhalb einer Lauffläche (5a, 6a) und in der Reifenradialrichtung außerhalb von Rillenböden (4s) der Querrillen (4) angeordnet sind,
ein Verhältnis Ar/At eines gesamten Flächeninhalts Ar der Aussparungen (10) zu einem gesamten Flächeninhalt At der Laufflächen (5a) der mehreren Blöcke (5) in einer Bodenkontaktfläche (2a) 10% bis 20% beträgt, wenn der Reifen (1) an einer Normalfelge montiert und bis zu einem normalen Innendruck aufgepumpt ist, eine Normallast auf den Reifen (1) ausgeübt wird und der Reifen (1) unter einem Sturzwinkel von 0° mit einer Ebene in Kontakt gebracht ist,
die Aussparungen (10) einen abgeschrägten Abschnitt (11), einen gestuften Abschnitt (12) und eine mittig endende Rille (14) umfassen und

die mit einer Aussparung versehenen Blöcke (6) jeweils zumindest einen Feinschnitt (15) aufweisen,

**dadurch gekennzeichnet, dass**

die Aussparungen (10) ferner einen erhöhten Abschnitt (13) umfassen,

wobei der Feinschnitt (15) den erhöhten Abschnitt (13) umfasst, der gebildet ist, indem ein Feinschnittboden (15s) erhöht ist.

2. Reifen (1) nach Anspruch 1, wobei ein Verhältnis Cr/Ct eines gesamten Flächeninhalts Cr der Aussparungen (10) in einem Laufflächen-Kronenabschnitt (2c) zu einem gesamten Flächeninhalt Ct der Laufflächen (5a) in dem Laufflächen-Kronenabschnitt (2c) größer als ein Verhältnis Sr/St eines gesamten Flächeninhalts Sr der Aussparungen (10) in einem Laufflächen-Schulterabschnitt (2s) zu einem gesamten Flächeninhalt St der Laufflächen (5a) in dem Laufflächen-Schulterabschnitt (2s) in der Bodenkontaktfläche (2a) ist.

3. Reifen (1) nach Anspruch 2, wobei das Verhältnis Cr/Ct 15% bis 30% beträgt.

4. Reifen (1) nach Anspruch 2 oder 3, wobei das Verhältnis Sr/St 6% bis 13% beträgt.

5. Reifen (1) nach einem der Ansprüche 1 bis 4, wobei jeder der abgeschrägten Abschnitte (11) an einem Rand der Lauffläche (6a) gebildet ist.

6. Reifen (1) nach einem der Ansprüche 1 bis 5, wobei jeder der gestuften Abschnitte (12) an einem Rand der Lauffläche (6a) gebildet und zurückversetzt ist, um eine gestufte Form zu bilden.

7. Reifen (1) nach einem der Ansprüche 1 bis 6, wobei der mit einer Aussparung versehene Block (6) zumindest eine mittig endende Rille (14) aufweist.

8. Reifen (1) nach einem der Ansprüche 1 bis 7, wobei

jeder der abgeschrägten Abschnitte (11) an einem Rand der Lauffläche (6a) gebildet ist und jeder der gestuften Abschnitte (12) an einem Rand der Lauffläche (6a) gebildet und zurückversetzt ist, um eine gestufte Form zu bilden, und

ein gesamter Flächeninhalt Aa der gestuften Abschnitte (12), ein gesamter Flächeninhalt Ab der erhöhten Abschnitte (13) und ein gesamter Flächeninhalt Ac der abgeschrägten Abschnitte (11) in der Bodenkontaktfläche (2a) dem folgenden Ausdruck (1) genügen

$$Aa > Ab > Ac \cdots (1).$$

9. Reifen (1) nach einem der Ansprüche 1 bis 8, wobei in der Bodenkontaktfläche (2a) ein Verhältnis Ab/At des gesamten Flächeninhalts Ab der erhöhten Abschnitte (13) zu dem gesamten Flächeninhalt At der Laufflächen (5a) der mehreren Blöcke (5) nicht kleiner als 3% ist.

10. Reifen (1) nach Anspruch 5, 8 oder 9, wobei in der Bodenkontaktfläche (2a) ein Verhältnis Ac/At des gesamten Flächeninhalts Ac der abgeschrägten Abschnitte (11) zu dem gesamten Flächeninhalt At der Laufflächen (5a) der mehreren Blöcke (5) nicht kleiner als 1% ist.

**Revendications**

1. Pneumatique (1) comprenant

une portion formant bande de roulement (2), dans lequel

la portion formant bande de roulement (2) a une pluralité de blocs (5) formés par des rainures circonférentielles (3) et des rainures latérales (4),

la pluralité de blocs (5) incluent au moins des blocs équipés d'évidements (6) ayant des évidements (10) disposés à l'intérieur d'une surface de bande de roulement (5a, 6a) dans une direction radiale du pneumatique et à l'extérieur de fonds de rainures (4s) des rainures latérales (4) dans la direction radiale du pneumatique,

un rapport Ar/At d'une aire totale Ar des évidements (10) sur une aire totale At des surfaces de bande roulement (5a) de la pluralité de blocs (5) est de 10 % à 20 % dans une surface de contact au sol (2a) quand le pneumatique (1) est monté sur une jante normale et est gonflé à une pression interne normale, qu'une charge normale est appliquée sur le pneumatique (1), et que le pneumatique (1) est amené en contact avec un plan sous un angle de cambrure de 0°,

les évidements (10) incluent une portion chanfreinée (11), une portion en gradin (12) et une rainure se terminant à mi-chemin (14), et

les blocs équipés d'évidements (6) ont chacun au moins une fente (15),

**caractérisé en ce que**

les évidements (10) incluent en outre une portion surélevée (13),

la fente (15) inclut la portion surélevée (13) formée en surélevant un fond de fente (15s).

2. Pneumatique (1) selon la revendication 1, dans lequel un rapport Cr/Ct d'une aire totale Cr des évidements (10) dans une portion de couronne de bande de roulement (2c) sur une aire totale Ct des surfaces de bande de roulement (5a) dans la portion de couronne de bande de roulement (2c) est supérieur à un rapport Sr/St d'une aire totale Sr des évidements (10) dans une portion d'épaulement de bande de roulement (2s) sur une aire totale St des surfaces de bande de roulement (5a) dans la portion d'épaulement de bande de roulement (2s), dans la surface de contact au sol (2a).

3. Pneumatique (1) selon la revendication 2, dans lequel le rapport Cr/Ct est de 15 % à 30 %.

4. Pneumatique (1) selon la revendication 2 ou 3, dans lequel le rapport Sr/St est de 6 % à 13 %.

5. Pneumatique (1) selon l'une quelconque des revendications 1 à 4, dans lequel chacune des portions chanfreinées (11) est formée au niveau d'un bord de la surface de bande de roulement (6a).

6. Pneumatique (1) selon l'une quelconque des revendications 1 à 5, dans lequel chacune des portions en gradin (12) est formée au niveau d'un bord de la surface de bande de roulement (6a) et est évidée pour réaliser une forme de gradin.

7. Pneumatique (1) selon l'une quelconque des revendications 1 à 6, dans lequel le bloc équipé d'évidements (6) a au moins une rainure se terminant à mi-chemin (14).

8. Pneumatique (1) selon l'une quelconque des revendications 1 à 7, dans lequel

chacune des portions chanfreinées (11) est formée au niveau d'un bord de la surface de bande de roulement (6a), et chacune des portions en gradin (12) est formée au niveau d'un bord de la surface de bande de roulement (6a) et est évidé pour réaliser une forme de gradin, et

une aire totale Aa des portions en gradin (12), une aire totale Ab des portions surélevées (13) et une aire totale Ac des portions chanfreinées (11) satisfont l'expression (1) suivante dans la surface de contact au sol (2a) :

$$Aa > Ab > Ac \quad (1).$$

9. Pneumatique (1) selon l'une quelconque des revendications 1 à 8, dans lequel, dans la surface de contact au sol (2a), un rapport Ab/At de l'aire totale Ab des portions surélevées (13) sur l'aire totale At des surfaces de bande de roulement (5a) de la pluralité de blocs (5) n'est pas inférieur à 3 %.

10. Pneumatique (1) selon la revendication 5, 8 ou 9, dans lequel, dans la surface de contact au sol (2a), un rapport Ac/At de l'aire totale Ac des portions chanfreinées (11) sur l'aire totale At des surfaces de bande de roulement (5a) de la pluralité de blocs (5) n'est pas inférieur à 1 %.

Fig.1

Fig.2

Fig.3 **(a)**

Fig.3 **(b)**

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018176881 A
- EP 3659823 A1
- JP 2007331656 A
- JP 2003267003 A
- WO 2012087272 A
- JP 2013035346 A
- US 20140000767 A1
- US 20150336430 A1